# EUROPEAN PATENT APPLICATION

(11) **EP 2 387 920 A1**
(43) Date of publication of application: **23.11.2011**
(21) Application number: 10731182.1
(22) Date of filing: 05.01.2010
(51) Int. Cl.: A47G 23/08

(54) **FOOD AND DRINK CONVEYING DEVICE**

(30) Priority: 16.01.2009 JP 2009007637
(71) Applicant: Ishino Seisakusyo Co., Ltd., Ishikawa 921-8025 (JP)
(72) Inventor: ISHINO Haruki, Kanazawa-shi Ishikawa 921-8025 (JP); SASAHARA Shintaro, Kanazawa-shi Ishikawa 921-8025 (JP)
(74) Representative: Staudt, Hans-Peter
(86) International application number: PCT/JP2010/050032
(87) International publication number: WO 2010/082513

(57) **Abstract**

(57) Abstract: A food and drink conveying device (1) has: a traveling lane (1a) at least partially having curved paths (10a, 11a); a conveying and driving body (15) provided along the traveling lane (1a); a traveling body (7) that can travel along the traveling lane (1a) with food and drink (9) on top; and connecting means (18, 19) for driving and connecting the conveying and driving body (15) and the traveling body (7). The connecting means is formed of a first connecting means (18) attached to the traveling body (7) and a second connecting means (19) attached to the conveying and driving body (15). Either the first connecting means (18) or the second connecting means (19) moves in the main body to which it is attached so as to follow the other.

## Description

### Technical Field

The present invention relates to a food and drink conveying device for allowing a traveling body to travel along a traveling lane by driving a conveying and driving body.

### Background Art

Conventional food and drink conveying devices are provided between a kitchen area and a serving area and are provided with: an ordered food and drink conveying path (traveling lane) for conveying food and drink on a conveying surface in order to serve the food and drink to a customer area; a looped chain (conveying and driving body) provided so as to be movable along the ordered food and drink conveying path beneath the conveying surface; and a tray (traveling body) that can move on the conveying surface by means of wheels with food and drink placed on top, where the tray is supported by and connected to the chain on one side by means of a tray bracket extending from the chain in such a manner that the tray can move on the conveying surface when the chain is driven. In such a food and drink conveying device, the conveying path is partially made of a first corner (curved path) and a second corner (curved path) through which the tray goes around, and the first and second corners are provided with a support piece over which the tray rises while moving so that the wheels do not receive resistance from the conveying plane (see, for example, Patent Document 1).

### Prior Art Document

### Patent Document

Patent Document 1: Japanese Unexamined Patent Publication 2008-44688 (page 7, Fig 7)

### Summary of the Invention

### Problem to Be Solved by the Invention

In the food and drink conveying device in the Patent Document 1, however, the tray (traveling body) rides over the support piece in a corner (curved path) of the conveying path (traveling lane) so that the tray inclines by a predetermined angle θ relative to the conveying surface with the tray bracket as the fulcrum, and therefore there is a risk that the stability of the food and drink placed on the tray may be lost. Though some of the other conventional food and drink conveying devices use magnetic force to drive the tray so that the tray does not receive resistance from the conveying surface, the reliability of the connection for the drive is low due to the centrifugal force the tray receives in a corner.

The present invention is provided in view of these problems, and an object of the invention is to provide a food and drink conveying device for allowing a traveling body on which food and drink are placed to move without failure while maintaining the stability of the food and drink along the curved paths of the traveling lane.

### Means for Solving Problem

In order to achieve the above described object, the food and drink conveying device according to Claim 1 of the present invention is a food and drink conveying device, having: a traveling lane at least partially having a curved path; a conveying and driving body provided along the traveling lane; a traveling body that can travel along the above described traveling lane with food and drink placed on top; and a connecting means for driving and connecting the above described conveying and driving body and the above described traveling body, the food and drink conveying device allowing the above described traveling body to travel along the above described traveling lane by driving the above described conveying and driving body and being **characterized in that**
the above described connecting means is formed of a first connecting means attached to the above described traveling body and a second connecting means attached to the above described conveying and driving body, and
either the above described first connecting means or the above described second connecting means is attached to a main body and can move in the main body so as to follow the other connecting means.
According to this characteristic, one connecting means moves so as to follow the other connecting means in a curved path of the traveling lane, and therefore only the connecting means can move even when the orbits of the traveling body and the conveying and driving body are different, and thus the traveling body can travel stably without fail along the curved path.

The food and drink conveying device according to Claim 2 of the present invention is the food and drink conveying device according to Claim 1, **characterized in that** guide means for holding the above described traveling lane from the two sides in the direction of the width so as to regulate the traveling path of the above described traveling body are pivotally supported around an axis so as to be rotatable horizontally in two locations, front and rear, of the above described traveling body.
According to this characteristic, the guide means are pivotally supported by the traveling body around an axis so as to be rotatable horizontally in two portions, front and rear, of the traveling body, and therefore the traveling body can travel without fail even in a curved path of the traveling lane.

The food and drink conveying device according to Claim 3 is the food and drink conveying device according to Claim 1 or 2, **characterized in that** the above described first connecting means and the above described second connecting means are magnetic bodies respectively provided to the above described traveling body and the above described conveying and driving body.
According to this characteristic, the traveling body and the conveying and driving body are connected through magnetic force from the magnetic bodies, and therefore it is not necessary to directly connect a bracket or the like for conveying the drive from the conveying and driving body to the traveling body between the traveling body and the conveying and driving body, and thus it is not necessary to create a slit for moving the bracket or the like along the conveying path.

The food and drink conveying device according to Claim 4 of the present invention is the food and drink conveying device according to any of Claims 1 to 3, **characterized in that** the above described traveling body is positioned perpendicular to the above described conveying and driving body.
According to this characteristic, the conveying and driving body is not arranged in the direction of the width of the traveling body, and therefore the traveling lane can be made narrower.

The food and drink conveying device according to Claim 5 of the present invention is the food and drink conveying device according to any of Claims 2 to 4, **characterized in that** the above described guide means are provided with a traveling wheel for traveling along the above described traveling lane.
According to this characteristic, the traveling body can be prevented from swaying horizontally while traveling, and therefore the traveling body can travel more stably.

### Brief Description of the Drawings

FIG. 1 is a plan diagram showing the entirety of the food and drink conveying device according to the first embodiment;
FIG. 2 is a plan diagram showing a partially exposed ordered food and drink conveying path;
FIG. 3 is an exploded perspective diagram showing a traveling body;
FIG. 4 is a side diagram showing the traveling body along a straight path of the ordered food and drink conveying path;
FIG. 5 is a plan diagram showing the traveling body along a straight path of the ordered food and drink conveying path;
FIG. 6 is a cross sectional diagram along line A-A in FIG. 2;
FIG. 7 is a cross sectional diagram along line B-B in FIG. 2;
FIG. 8 is a plan diagram showing the traveling body in the first corner of the ordered food and drink conveying path;
FIG. 9 is a perspective diagram showing the traveling body in the second embodiment;
FIG. 10 is a cross sectional diagram showing the state of the traveling body when in use in the food and drink conveying device according to the second embodiment; and
FIG. 11(a) is a plan diagram showing the traveling body in the third embodiment and FIG. 11(b) is a cross sectional diagram along line C-C in FIG. 11 (a).

### Best Mode for Carrying Out the Invention

The food and drink conveying device according to the present invention is described below on the basis of the embodiments.

### First Embodiment

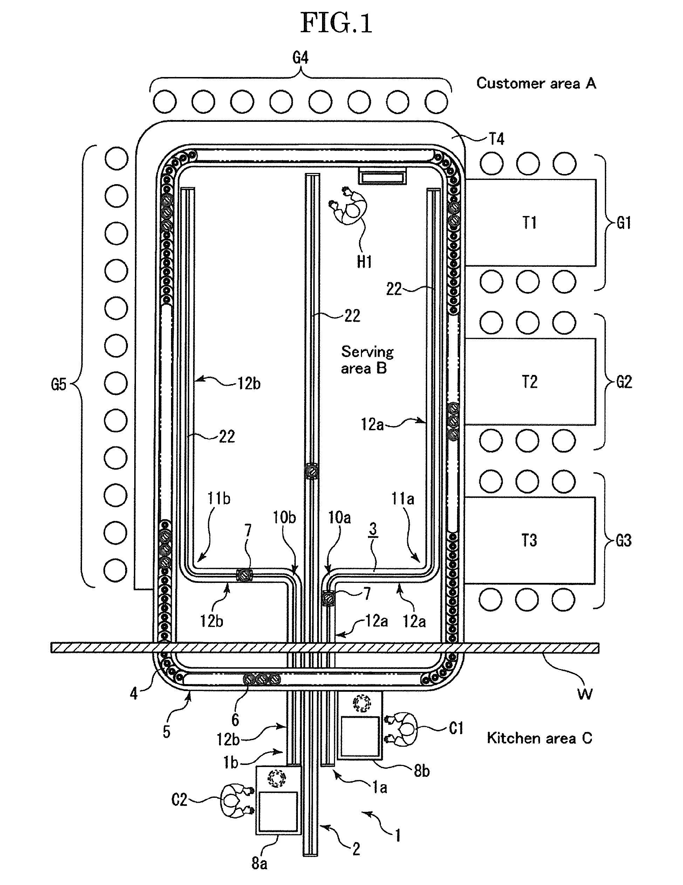

The food and drink conveying device according to the first embodiment is described in reference to FIGS. 1 to 8. Here, in the present embodiment, the direction in which the traveling body travels along the ordered food and drink conveying path from the kitchen area to the customer area is the direction in which the traveling body moves forward. First, the symbol 1 in FIG. 1 is a food and drink conveying device to which the present invention is applied. This food and drink conveying device 1 is provided with ordered food and drink conveying paths 1a, 1b and 2, which make up the traveling lane in the present invention, that cover the kitchen area C where the kitchen staff C1, C2 and the like prepare sushi and other food and drinks, and the customer area A where customers eat and drink in a conveyor-belt sushi restaurant, for example.

A looped conveying path 5 in rectangular form as viewed from the top is installed around the ordered food and drink conveying paths 1a, 1b and 2 and along the tables T1, T2, T3 and T4 in the customer area A. The looped conveying path 5 is provided with a crescent chain conveyor 4, which is looped and can rotate, so that dishes 6 on which food and drink are placed are conveyed along this crescent chain conveyor 4 continuously when the crescent chain conveyor 4 is driven.

In the conveyor-belt sushi restaurant where such a looped conveying path 5 is installed, the customers can eat and drink by removing the food and drink conveyed along the looped conveying path 5, and when customers want to eat food or have a drink of something that is not conveyed on the looped conveying path 5, an individual order can be placed to the staff or through an ordering device, not shown.

The thus individually ordered food and drink are placed on any of the ordered food and drink conveying paths 1a, 1b and 2 within the kitchen area C after being prepared in the kitchen area C, and then conveyed to the vicinity of the customer who placed the order.

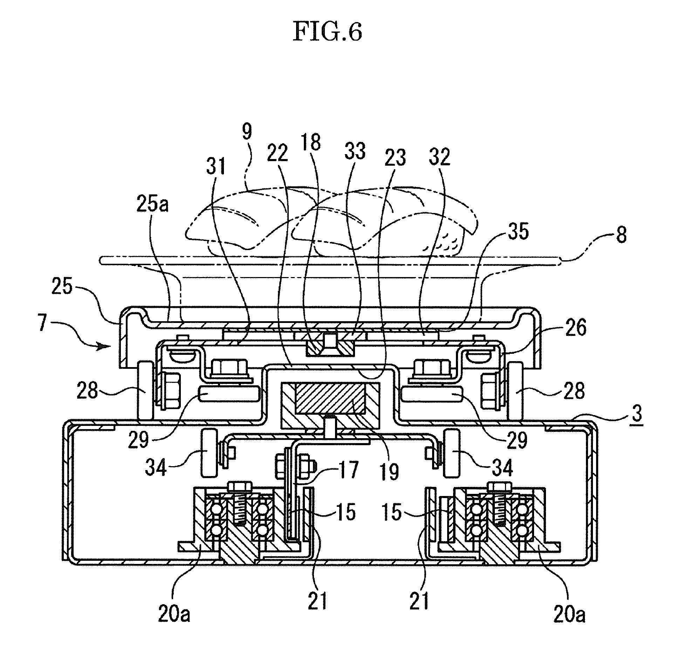

Concretely, when an order is placed from a customer in the customer area A, kitchen staff C1, C2 or the like in the kitchen area C behind the partition wall W prepare the ordered food and drink 9 on the preparation table 8a or 8b and place it on a dish 6, and after that, as described below, place the dish 6 on the traveling body 7 which is provided so as to freely travel forwards and backwards on the conveying surface 3 along the ordered food and drink conveying paths 1a, 1b and 2 (see FIG. 6).

Next, the ordered food and drink 9 placed on the traveling body 7 is conveyed to a serving area B through the ordered food and drink conveying paths 1a, 1b or 2. At this time, the ordered food and drink 9 that has been conveyed through the ordered food and drink conveying path 1a or 1b can be removed from the ordered food and drink conveying path 1a or 1b directly by the customer in the area G1, G2, G3 or G5, while the ordered food and drink 9 that has been conveyed through the ordered food and drink conveying path 2 is conveyed to the service staff H1, who distributes it to the customer.

The traveling body 7 that has conveyed the ordered food and drink 9 returns to the kitchen area C through the conveying surface 3 along the ordered food and drink conveying path 1a, 1b or 2 which runs from the kitchen area C to the serving area B. That is to say, the traveling body 7 is provided so as to move freely between the serving area B and the kitchen area C on the conveying surface 3 along the ordered food and drink conveying paths 1a, 1b and 2 which are formed as independent conveying paths.

Next, these three ordered food and drink conveying paths 1a, 1b and 2 are described. As shown in FIG. 1, the ordered food and drink conveying paths 1a, 1b and 2 are provided to run straight from the kitchen area C to the customer area A, passing through the openings, not shown, in the partition wall W. In the kitchen area C, the ordered food and drink conveying path 2 is located at the center and the ordered food and drink conveying paths 1a and 1b are placed on the left and right of the ordered food and drink conveying path 2 close to each other.

Since the three ordered food and drink conveying paths 1a, 1b and 2 are placed close to each other, the ordered and prepared food and drink can be selected efficiently and placed on any of these ordered food and drink conveying paths from the same place.

Meanwhile, the ordered food and drink conveying path 2 is provided at the center of the rectangular serving area B in such a manner as to divide the serving area B into two as viewed from the top. The ordered food and drink conveying paths 1a and 1b are bent on the left or right so as to move away from the ordered food and drink conveying path 2 at the center in the vicinity of the partition wall W, and after that runs straight close to the inside of the looped conveying path 5. Furthermore, the ordered food and drink conveying paths 1a and 1b are bent towards the area G4 in the vicinity of the inside of the looped conveying path 5, and after that run along the looped conveying path 5.

That is to say, the ordered food and drink conveying path 1a has a first corner 10a (right curved) and a second corner 11a (left curved) as part of a curved path in the present invention close to the partition wall W, and the ordered food and drink conveying path 1b has a first corner 10b (left curved) and a second corner 11b (right curved) as part of a curved path in the present invention close to the partition wall W.

In addition, the section of the ordered food and drink conveying paths 1a and 1b between the kitchen area C and the first corners 10a and 10b, the section of the ordered food and drink conveying paths 1a and 1b between the first corners 10a and 10b and the second corners 11a and 11b, and the section of the ordered food and drink conveying paths 1a and 1b between the second corners 11a and 11b and the area G4 are straight paths 12a and 12b as described above.

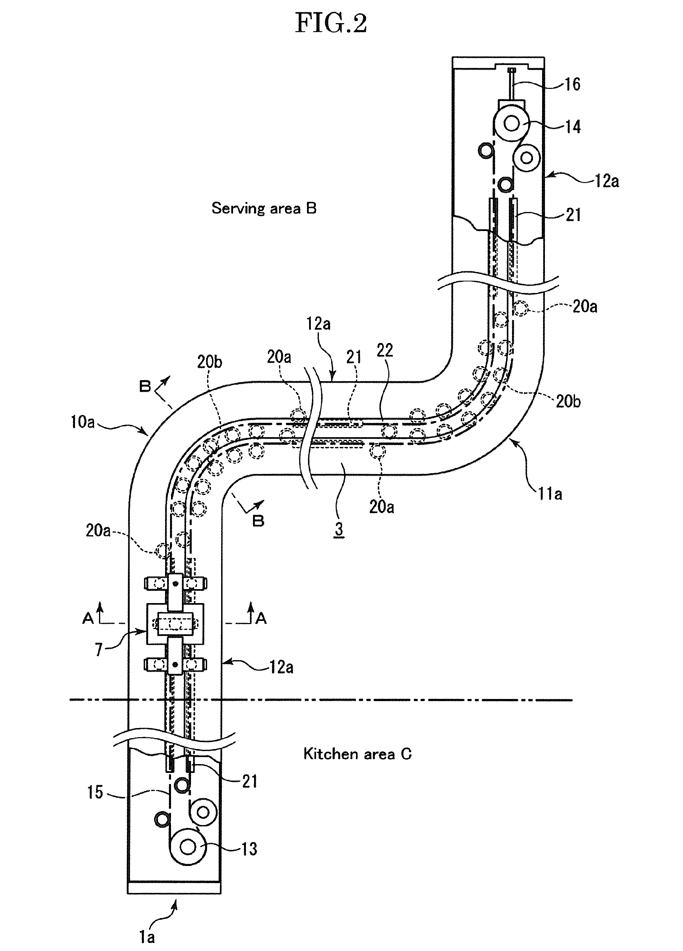

Next, these ordered food and drink conveying paths 1a, 1b and 2 as well as the traveling body 7 are described in detail in reference to FIGS. 2 to 8. Though the ordered food and drink conveying paths 1a, 1b and 2 have different forms, they share the same structure for allowing the traveling body 7 to travel. Therefore, only the ordered food and drink conveying path 1a is described below, and the descriptions of the other ordered food and drink conveying paths 1b and 2 are omitted. Furthermore, when the traveling body 7 is in the corners 10a and 11a of the ordered food and drink conveying path 1a and in the corners 10b and 11b of the ordered food and drink conveying path 1b, only the direction in which the below described first magnetic body 18 moves is opposite, and therefore only the description of the traveling body 7 in the first corner 10a of the ordered food and drink conveying path 1a is provided.

First, the structure of the ordered food and drink conveying path 1a for allowing the traveling body 7 to travel is described. As shown in FIG. 2, a drive sprocket 13 which rotates horizontally by means of a drive motor, not shown, is provided at the end of the ordered food and drink conveying path 1a on the kitchen area C side beneath the conveying surface 3, and a tension sprocket 14 is provided at the end on the serving area B side.

A drive belt 15, which is the conveying and driving body in the present invention, is looped around the drive sprocket 13 and the tension sprocket 14 at the two ends so that the drive belt 15 is driven through the rotation of the drive sprocket 13. Here, this tension sprocket 14 is provided with a tension adjusting portion 16 for adjusting the tension to the drive belt 15.

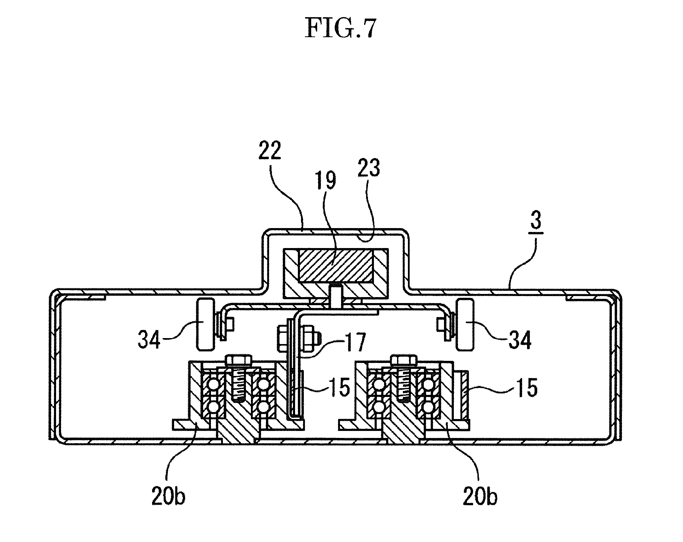

This drive belt 15 is looped and provided beneath the conveying surface 3 on which the traveling body 7 travels along the ordered food and drink conveying path 1a so that the drive belt 15 moves along the conveying surface 3. In addition, as shown in FIGS. 6 and 7, a belt bracket 17 in approximately L shape is attached to one portion of the drive belt 15.

The upper end of this belt bracket 17 is placed beneath the center of the conveying surface 3 in the direction of the width. Furthermore, a second magnetic body 19, which is the second connecting means in the present invention, is secured to the upper end of this belt bracket 17. It is desirable for this second magnetic body 19 to be made of a metal having ferromagnetism or a permanent magnet.

As shown in FIGS. 2, 6 and 7, the drive belt 15 is guided by a number of idlers 20a provided in the direction of conveyance so as to be freely slidable beneath the straight path 12a, and it is also guided by a number of idlers 20b provided in the first corner 10a and the second corner 11a with the same curvature as the first corner 10a and the second corner 11a so as to be freely slidable.

These idlers 20a and 20b are pivotally supported by an axis so as to be rotatable horizontally so that noise can be prevented from being made through the friction against the drive belt 15. In addition, a belt guide 21 for preventing the drive belt 15 from being removed between the idlers 20a and 20b is provided beneath the straight path 12a.

Furthermore, a rail 22 protrudes from the center of the ordered food and drink conveying path 1a at the center in the direction of the width of the conveying surface 3 along approximately the entirety in the longitudinal direction of the ordered food and drink conveying path 1a. Concretely, the conveying surface 3 is the upper surface of a metal plate, such as of aluminum or stainless steel, and the rail 22 is formed through pressing of this plate, and therefore the plate where the rail is formed has a conveying trench 23 in a C shape facing downwards in the cross section on the bottom side.

The above second magnetic body 19 is placed within this conveying trench 23, and this second magnetic body 19 moves along approximately the entirety of the ordered food and drink conveying path 1a within the conveying trench 23 when the drive belt 15 is driven.

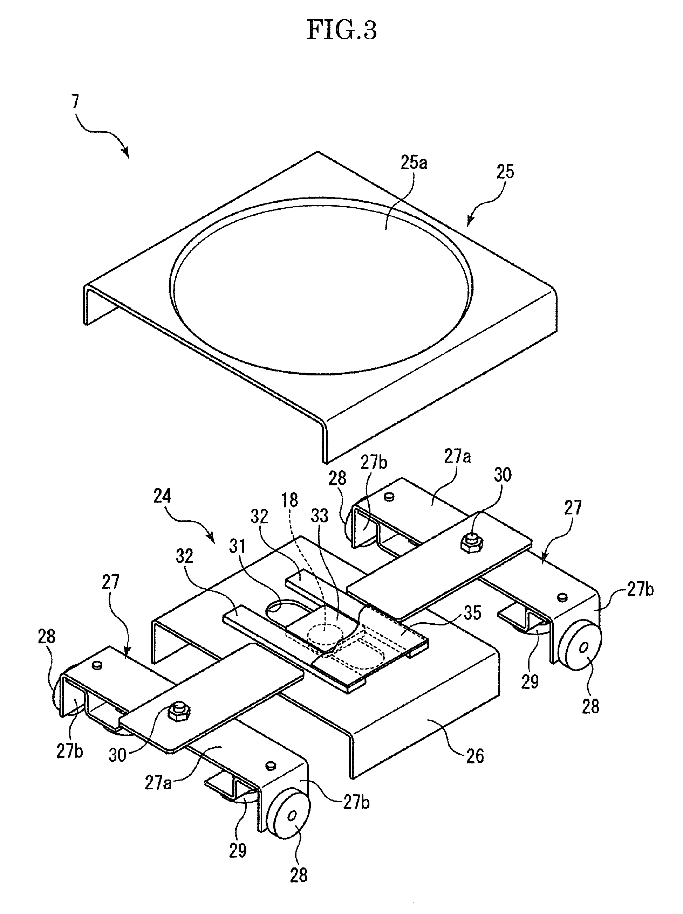

As shown in FIG. 3, the traveling body 7 is formed of a carrier 24 which runs on the conveying surface 3 and a tray 25 for the placement of a dish 6 on which an ordered food and drink 9 is placed and which is attached to the carrier 24 from the top. A recess 25a for the placement of a dish 6 is created on the upper surface of the tray 25 so that the dish 6 placed in this recess 25a can be prevented from falling off from the tray 25.

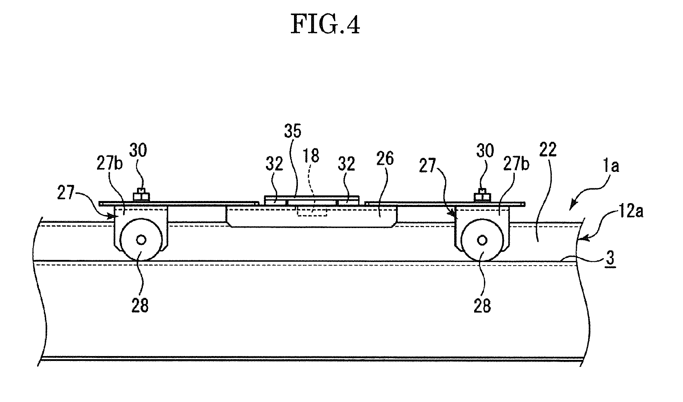

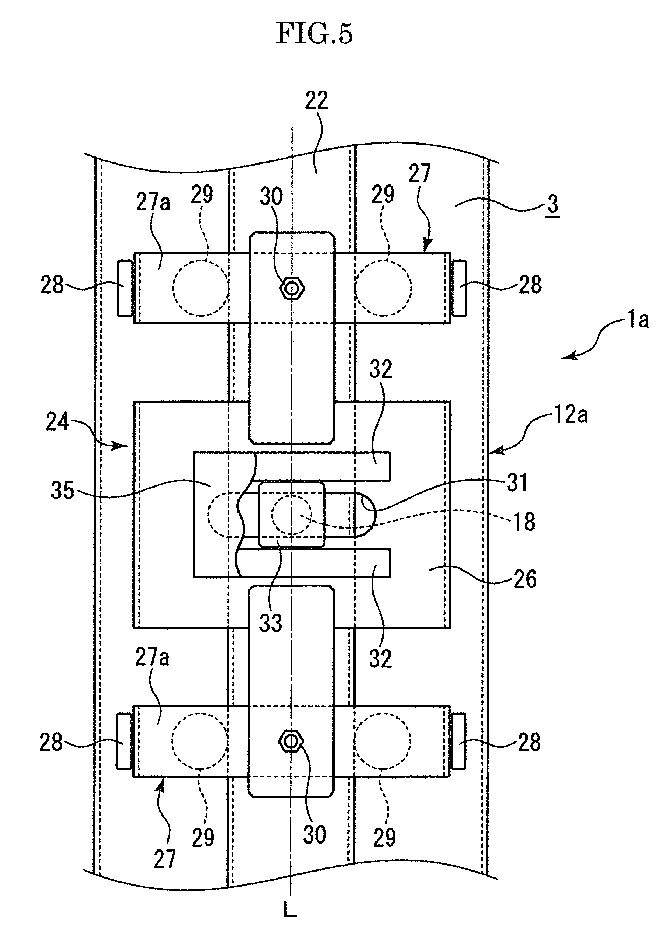

The carrier 24 is mainly formed of a base 26 to which the tray 25 is attached and wheel brackets 27 which are attached to portions of the base 26, the front end and the rear end. These wheel brackets 27, as shown in FIGS. 4 and 5, are in a C shape facing downward and formed of a horizontal plate 27a in rectangular form that is long in the direction of the width as viewed from the top and vertical plates 27b that extend from the left and right ends of the horizontal plate 27a towards the bottom.

Load wheels 28, which are wheels for allowing the traveling body 7 to travel on the conveying surface 3 in the present invention, are supported around an axis on the outside of the two vertical plates 27b. In addition, two orbital wheels 29, which are rotatable bodies in the present invention, are pivotally supported by the carrier 24 around an axis between the two vertical plates 27b so as to be freely rotatable horizontally. Concretely, these orbital wheels 29 are supported around an axis so as to be symmetrical between the left and right sides relative to a straight line within the space surrounded by the horizontal plate 27a and the two vertical plates 27b.

Furthermore, the distance between the two orbital wheels 29 is approximately the same as or slightly greater than the width of the rail 22 or the distance between the left side and the right side of the rail 22 on the conveying surface 3. When the traveling body 7 is placed on the conveying surface 3, the two orbital wheels 29 make contact with or are located in close vicinity of the rail 22 in the front and in the rear of the traveling body 7 so that the rail 22 is sandwiched from both sides in the direction of the width.

Thus, the orbital wheels 29 hold the rail 22 in the direction of the width in the front and in the rear of the traveling body 7 so that the traveling path for the traveling body 7 is restricted on the conveying surface 3, and in addition the traveling body 7 can be prevented from vibrating in the direction of the width. That is to say, these wheel brackets 27 and the orbital wheels 29 form the swaying preventing means in the present invention.

As shown in FIG. 5, these wheel brackets 27 are pivotally supported around axes in the front and in the rear end of the carrier 24 so as to be freely rotatable horizontally where the two axes 30 are provided along the center line L which divides the carrier 24 into two in the direction of the width. Furthermore, this center line L is located above the rail 22 which is at the center of the ordered food and drink conveying path 1a in the direction of the width, while the traveling body 7 is traveling along the straight path 12a of the ordered food and drink conveying path 1a.

In addition, a long hole 31, which is long in the direction of the width, is provided at approximately the center of the base 26 as viewed from the top so as to penetrate through the carrier 24 in the upward and downward directions. Guide pieces 32, which face in the direction of the width from the upper surface of the base 26, are provided in the front and rear of the long hole 31. These guide pieces 32 are provided parallel to the long hole 31 and have approximately the same width as the long hole 31.

In addition, a sliding piece 33, which is approximately square as viewed from the top, is provided between the front and rear guide pieces 32. The four sides of this sliding piece 33 have approximately the same length as the distance between the front and rear guide pieces 32 so that the sliding piece 33 can slide in the direction of the width above the long hole 31, while the front and the rear are guided by the two guide pieces 32.

A first magnetic body 18, which is the first connecting means in the present invention, is attached to the lower surface of this sliding piece 33. Either a second magnetic body 19 provided beneath the conveying surface 3 or the first magnetic body 18 attached to the traveling body 7 is formed of a ferromagnetic metal and the other is formed of a permanent magnet or both may be formed of a permanent magnet. Furthermore, the two are placed so that the different magnetic poles face each other with the conveying surface 3 in between in the case where the two are formed of a permanent magnet.

Here, guide wheels 34, which form a pair in the direction of the width, are provided in the upper end portion of the belt bracket 17 so as to make contact with the lower surface of the plate of which the upper surface is the conveying surface 3. These guide wheels 34 prevent the drive belt 15 from moving towards the first magnetic body 18 when the first magnetic body 18 and the second magnetic body 19, which are provided so as to face each other with the conveying surface 3 in between, are attracted to each other through magnetic force.

The first magnetic body 18 can move in the direction of the width within the long hole 31 when the sliding piece 33 slides in the direction of the width above the long hole 31. Here, the range within which the first magnetic body 18 moves in the direction of the width is regulated because the first magnetic body 18 may make contact with the left and right ends of the inner wall of the long hole 31. In addition, a support plate 35 for supporting the tray 25 from the bottom is attached between the front and rear guide pieces 32 when the tray 25 is attached to the carrier 24, and thus the long hole 31 and the sliding piece 33 are covered by the carrier 24 as viewed from the top, as shown in FIG. 5.

When the drive belt 15 is driven, the above described structure of the ordered food and drink conveying path 1a and the traveling body 7 allows the traveling body 7 to which the first magnetic body 18 that is driven by and connected to the second magnetic body 19 through magnetic force is attached to travel along the ordered food and drink conveying path 1a in the conveying surface 3.

Next, the operation of the traveling body 7 which travels on the conveying surface 3 is described. First, as shown in FIG. 5, the first magnetic body 18 is provided along the straight path 12a of the ordered food and drink conveying path 1a so as to face the second magnetic body 19 which moves within the conveying trench 23, and therefore is located in approximately the center of the long hole 31 which is along the center line L that connects the front and rear axes 30.

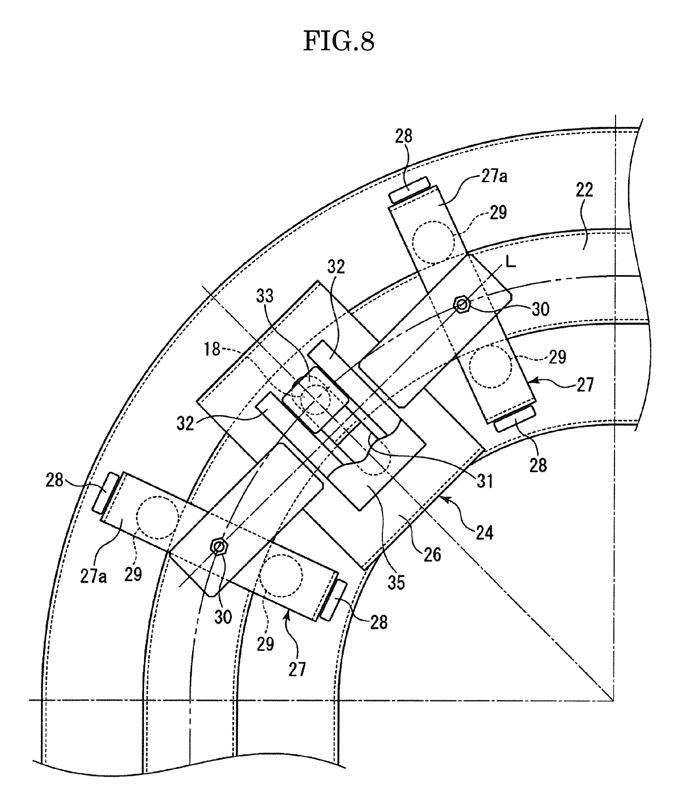

As shown in FIG. 8, when the traveling body 7 comes to the first corner 10a, the front wheel bracket 27 of the traveling body 7 starts rotating along the curve of the rail 22 in the first corner 10a, and then the wheel brackets 27 rotate around the axes 30 so that the orbital wheels 29 move along the rail 22 in the first corner 10a.

When the traveling body 7 moves in the first corner 10a, the amount of swaying and rotation is different between the front and rear wheel brackets 27 of the traveling body 7, and therefore there are different tracks of the inner wheels of the traveling body 7, and thus the center line L of the traveling body 7 moves in the first corner 10a inside the path through which the second magnetic body 19 moves (two-dotted chain line in FIG. 8).

At this time, the first magnetic body 18 is driven by and connected to the second magnetic body 19 through magnetic force, and therefore moves towards the outside of the first corner 10a within the long hole 31 relative to the traveling body 7 which moves with the center line L shifting towards the inside of the first corner 10a so as to maintain the position of facing the second magnetic body 19. That is to say, the first magnetic body 18 moves to follow the second magnetic body 19 through the traveling body 7.

When the traveling body 7 comes back to the straight path 12a from the first corner 10a, the traveling body 7 moves such that the center line L of the traveling body 7 is located above the center of the rail 22, and therefore the first magnetic body 18 moves towards the center of the long hole 31 within the long hole 31.

As described above, the first magnetic body 18 attached to the traveling body 7 moves to follow the second magnetic body 19 so that such a state that the second magnetic body 19 and the first magnetic body 18 are always connected when driven is maintained, and the traveling body 7 can travel stably even when there is a difference in the orbit through which the traveling body 7 and the drive belt 15 move.

As described above, in the food and drink conveying device 1 according to the first embodiment, the connecting means is formed of a first magnetic body 18 attached to the traveling body 7 and a second magnetic body 19 attached to the drive belt 15 so that either the first magnetic body 18 or the second magnetic body 19 can move in the main body to which it is attached so as to follow the other magnetic body 19 or 18, and therefore one magnetic body 18 or 19 moves to follow the other magnetic body 19 or 18 in the first corner 10a and the second corner 11a of the ordered food and drink conveying path 1a. Even in the case where the orbits of the traveling body 7 and the drive belt 15 are different, the centrifugal force allows the traveling body 7 to travel smoothly with good response in the first corner 10a and the second corner 11a, and thus the traveling body 7 can travel stably without fail in the first corner 10a and the second corner 11a.

In addition, wheel brackets 27 for holding the ordered food and drink conveying path 1a from the two sides in the direction of the width and having orbital wheels 29 for regulating the traveling path of the traveling body 7 are pivotally supported around an axis so as to be rotatable horizontally in two locations, front and rear, of the traveling body 7, and therefore the traveling body 7 can travel without fail along the ordered food and drink conveying path 1a even including the first corner 10a and the second corner 11a.

In addition, the first connecting means and the second connecting means are the first magnetic body 18 and the second magnetic body 19 which are respectively provided to the traveling body 7 and the drive belt 15, and therefore the traveling body 7 and the drive belt 15 are connected to each other through magnetic force from the first magnetic body 18 and the second magnetic body 19. Thus, it is not necessary to directly connect a bracket or the like for conveying the drive of the drive belt 15 to the traveling body 7 between the traveling body 7 and the drive belt 15, and therefore it is not necessary to create a slit for allowing the bracket to move along the ordered food and drink conveying path 1a.

In addition, the traveling body 7 is positioned perpendicular to the drive belt 15, and thus no part of the drive belt 15 is positioned in the direction of the width of the traveling body 7, and therefore the ordered food and drink conveying path 1a can be made narrower.

In addition, the wheel brackets 27 are provided with load wheels 28 for allowing the traveling body 7 to travel along the ordered food and drink conveying path 1a so that the traveling body 7 can be prevented from swaying horizontally when traveling, and therefore the traveling body 7 can travel more stably

### Second Embodiment

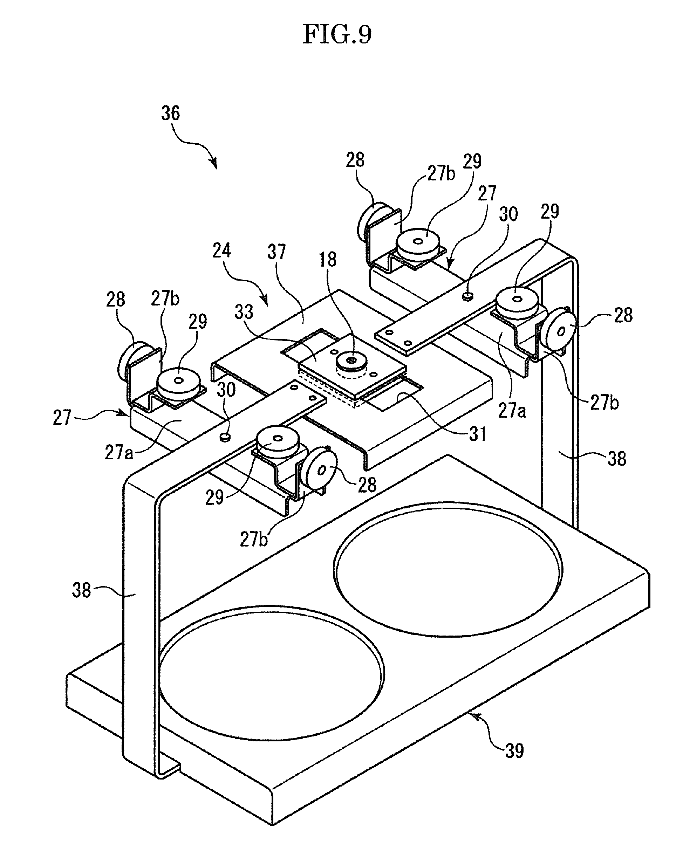

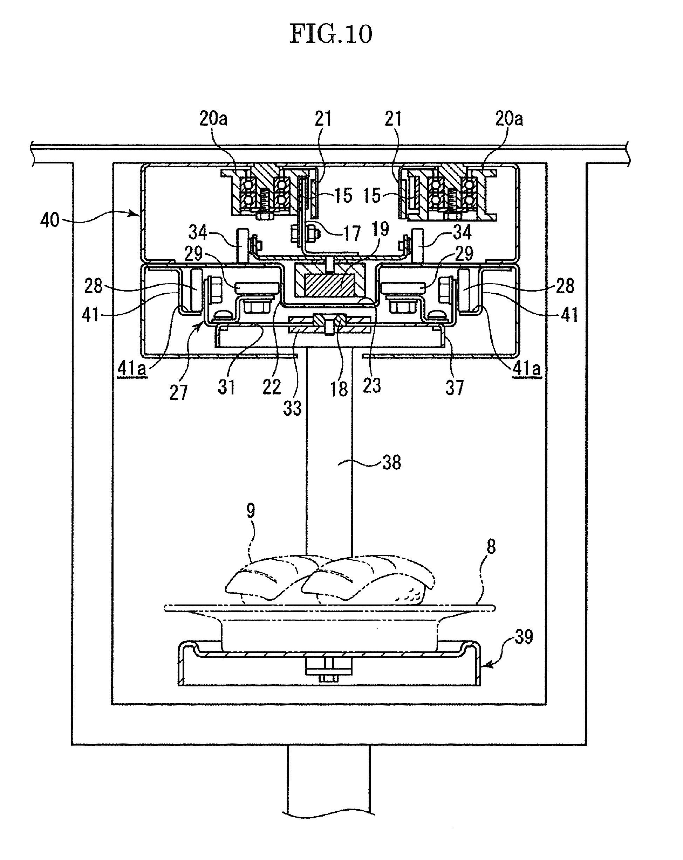

Next, the food and drink conveying device according to the second embodiment is described in reference to FIGS. 9 and 10. Here, the descriptions of the components having the same structure as in the above embodiment are not repeated.

The traveling body 7 travels on the conveying surface 3 of the ordered food and drink conveying path 1a in the food and drink conveying device 1 according to the first embodiment. In contrast, supports 38 are provided so as to extend downwards from the front end and the rear end of the base 37 of the traveling body 36, as shown in FIG. 9, and a tray 39 is attached between the front and rear supports 38 in the second embodiment. The traveling body 36 is attached to the ordered food and drink conveying path 40 having such a structure as to be inverted from the structure in the first embodiment so that the traveling body 36 can travel, as shown in FIG. 10, with a tray 39 hanging from the traveling body 36 and conveying an ordered food and drink 9. In this case as well, the same working effects as in the first embodiment can be gained.

In this case, it is necessary for the wheel brackets 27 in a C shape facing upwards to be attached with vertical plates 27b extending upwards from the left and right ends of horizontal plates 27a, and at the same time for conveying brackets 41 having a conveying surface 41a on which load wheels 28 engage and move from the left and right ends of the ordered food and drink conveying path 40 to be attached. In addition, the second magnetic body 19 is provided above the base 37, and therefore the first magnetic body 18 is provided on the upper surface of the sliding piece 33.

### Third Embodiment

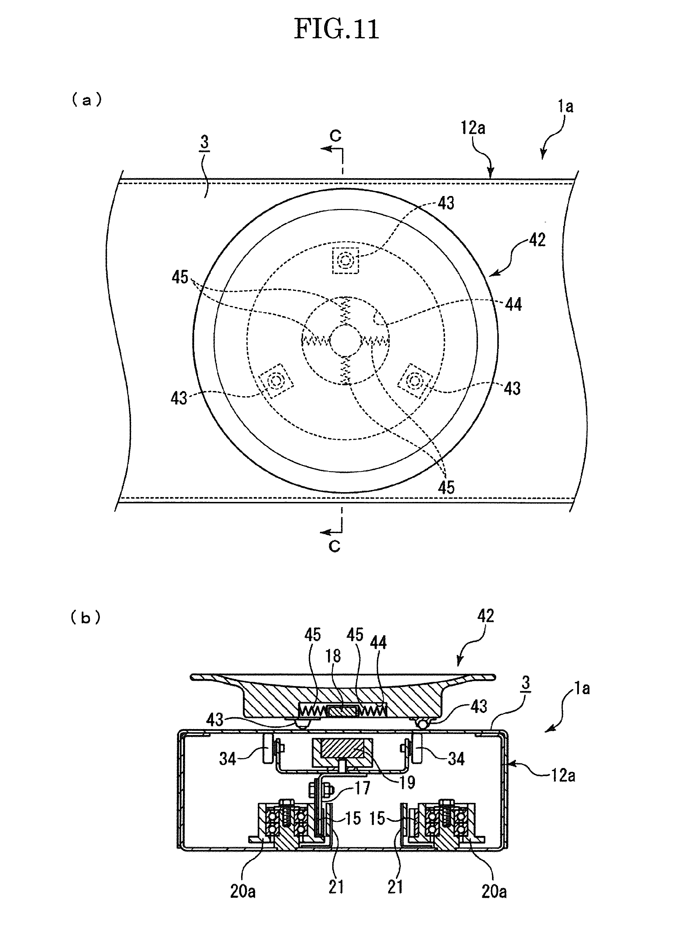

Next, the food and drink conveying device according to the third embodiment is described in reference to FIGS. 11(a) and 11(b). Here, the same symbols are attached to the same components as in the above embodiments and the same descriptions are not repeated.

Though in the food and drink conveying device 1 according to the first embodiment the orbital wheels 29 hold the rail 22 from the two sides in the direction of the width, in the front and rear of the traveling body 7, so that the traveling body 7 can travel along the rail 22 on the conveying surface 3 of the ordered food and drink conveying path 1a, it is also possible for the conveying surface 3 to be flat, as shown in FIGS. 11(a) and 11(b), so that the traveling body 42, which is in plate form as viewed from the top, can travel on this conveying surface 3.

In this case, a number of ball casters 43 (three in the present embodiment) for allowing the traveling body 42 to travel on the conveying surface 3 are attached to the bottom of the traveling body 42, and thus the traveling body 42 can go around the first corner 10a while reducing the friction between the traveling body 42 and the conveying surface 3.

Furthermore, a hole 44, which is circular as viewed from the top and faces downwards, is created at approximately the center of the bottom of the traveling body 42, and a first magnetic body 18 is placed within this hole 44. The first magnetic body 18 is supported by springs 45 horizontally in the four directions within the hole 44, and the elastic force of these springs 45 can allow the first magnetic body 18 to move within the hole 44.

When the traveling body 42 having the above described structure travels along approximately the center in the direction of the width of the straight path 12a and then gets to the first corner 10a, the centrifugal force that works on the traveling body 42 allows the traveling body 42 to move outside of the first corner 10a. At this time, the first magnetic body 18 moves towards the inside of the first corner 10a within the hole 44 relative to the traveling body 42 so as to maintain the position of facing the second magnetic body 19.

Here, when the traveling body 42 gets to the straight path 12a from the first corner 10a and the centrifugal force stops working on the traveling body 42, the traveling body 42 is pulled back to approximately the center in the direction of the width by the restoring force of the springs 45 within the hole 44.

Though the three embodiments of the present invention are described in reference to the drawings, concrete structures of the invention are not limited to these embodiments and the present invention covers modifications and additions as long as the gist of the present invention is not deviated from.

For example, though the three embodiments are described with the food and drink being sushi, the invention is not limited to this and can be applied to various foods and drinks.

In addition, though the food and drink conveying device 1 is described as a device for conveying ordered food and drink 9 ordered by a customer in the three embodiments, it may be a continuous conveying device for continuously conveying food and drink which have been prepared in advance between the kitchen area C and the customer area A.

Though the connecting means is magnetic bodies in the above described embodiments, the traveling body does not travel when connected with a magnetic body in the case where a traveling body having a guide means travels along the rail. A slit may be created throughout the entire length of the ordered food and drink conveying path, and rods or pins on the drive belt may be used as connecting means which are connected to the traveling body through the slit, and in this case as well, the pins are supported so as to be movable relative to the traveling body.

Though in the first embodiment the first magnetic body 18 is attached so as to be movable in the direction of the width within the long hole 31 of the base 26 and the second magnetic body 19 is secured to the upper end of the belt bracket 17 attached to the drive belt 15 so that the first magnetic body 18 can move to follow the second magnetic body 19, the first magnetic body 18 may be secured to the base 26 and the second magnetic body 19 may be attached so as to be movable in the direction of the width at the upper end of the belt bracket 17 so that the second magnetic body 19 can move to follow the first magnetic body 18.

### Explanation of Symbols

- 1: food and drink conveying device
- 1a, 1b, 2: ordered food and drink conveying path (traveling lane)
- 3: conveying surface
- 9: ordered food and drink
- 10a, 10b: first corner (curved path)
- 11a, 11b: second corner (curved path)
- 12a, 12b: straight path
- 15: drive belt (conveying and driving body)
- 18: first magnetic body (first connecting means)
- 19: second magnetic body (first connecting means)
- 22: rail
- 24: carrier
- 25: tray
- 26: base
- 27: wheel bracket (swaying preventing means)
- 28: load wheel
- 29: orbital wheel (rotatable body, swaying preventing means)
- 31: long hole
- 34: guide wheel
- 36: traveling body
- 37: base
- 38: support
- 39: tray
- 40: ordered food and drink conveying path
- 41a: conveying surface
- 42: traveling body
- 43: ball caster
- 44: hole
- 45: spring
- L: center line

## Claims

1. A food and drink conveying device, comprising: a traveling lane at least partially having a curved path; a conveying and driving body provided along the traveling lane; a traveling body that can travel along said traveling lane with food and drink placed on top; and a connecting means for driving and connecting said conveying and driving body and said traveling body, the food and drink conveying device allowing said traveling body to travel along said traveling lane by driving said conveying and driving body and being **characterized in that**
said connecting means is formed of a first connecting means attached to said traveling body and a second connecting means attached to said conveying and driving body, and
either said first connecting means or said second connecting means is attached to a main body and can move in the main body so as to follow the other connecting means.

2. The food and drink conveying device according to Claim 1, **characterized in that** guide means for holding said traveling lane from the two sides in the direction of the width so as to regulate the traveling path of said traveling body are pivotally supported around an axis so as to be rotatable horizontally in two locations, front and rear, of said traveling body.

3. The food and drink conveying device according to Claim 1 or 2, **characterized in that** said first connecting means and said second connecting means are magnetic bodies respectively provided to said traveling body and said conveying and driving body.

4. The food and drink conveying device according to any of Claims 1 to 3, **characterized in that** said traveling body is positioned perpendicular to said conveying and driving body.

5. The food and drink conveying device according to any of Claims 2 to 4, **characterized in that** said guide means are provided with a traveling wheel for traveling along said traveling lane.
